# DEMANDE DE BREVET EUROPEEN

(11) **EP 1 884 348 A1**
(43) Date de publication de la demande: **06.02.2008**
(21) Numéro de dépôt: 06118170.7
(22) Date de dépôt: 31.07.2006
(51) Int. Cl.: B29C 65/50

(54) **Emballage soudé - collé**

(71) Demandeur: Aisapack Holding SA, 1896 Vouvry (CH)
(72) Inventeur: Thomasset, Jacques, 1896 Vouvry (CH)
(74) Mandataire: Grosfillier, Philippe

(57) **Abrégé**

Procédé d'assemblage des extrémités d'un film thermoplastique pour la confection d'un emballage comprenant au moins une opération de soudage et une opération de collage pour réaliser ledit assemblage.

## Description

### Domaine de l'invention

L'invention se situe dans le domaine des emballages formés au moyen de films plastiques. Elle concerne plus précisément un procédé d'assemblage des extrémités d'un film ainsi que les emballages obtenus par ce procédé.

### Etat de la technique

Les emballages confectionnés à partir de films contenant au moins une couche de plastique, par exemple des sachets, des tubes ou encore des briques, sont connus dans l'état de la technique. Ces emballages sont confectionnés par soudage des extrémités du film.

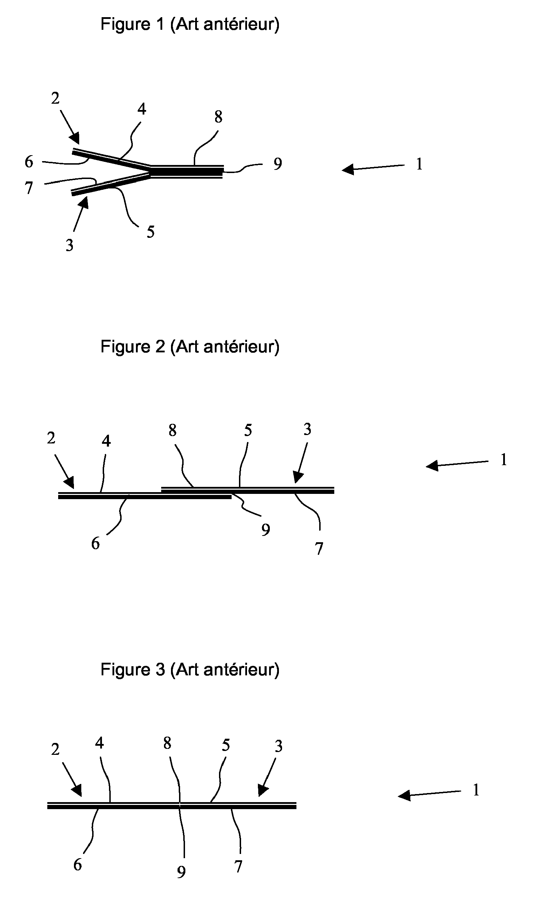

Une première méthode de soudage consiste à réaliser un assemblage dit « chair - chair » dans lequel on soude la face inférieure du film sur elle-même. Cet assemblage est illustré à la figure 1.

Une deuxième méthode de soudage consiste à réaliser un assemblage dit « chair - cuir » dans lequel on forme un recouvrement des extrémités du film et on soude la face inférieure sur la face supérieure dudit film. Cet emballage est illustré à la figure 2.

Une troisième méthode d'assemblage dite "bout à bout" consiste à souder les extrémités du film sans les chevaucher. Cette méthode illustrée à la figure 3 est décrite dans les brevets WO2005095105A1 et US5569144.

Les emballages soudés décrits dans l'art antérieur présentent de nombreux avantages qu'il n'est pas nécessaire de rappeler. Cependant, ces emballages présentent également plusieurs inconvénients non-négligeables.

Un inconvénient des emballages soudés est lié à la moindre résistance observée au niveau de la zone soudée. Cette moindre résistance est souvent liée à la discontinuité de l'emballage au niveau de la soudure, d'où une concentration de contrainte favorisant la rupture lors d'une chute. L'opération de soudage peut également avoir pour effet de diminuer la résistance du film dans la zone chauffée à cause d'une modification de l'orientation des chaînes moléculaires ou d'une modification locale du taux de cristallinité. Pour pallier à cet inconvénient, il est commun de légèrement surdimensionner les propriétés du film, ce qui engendre des coût supplémentaires. Une autre solution décrite dans les brevets US4733800 et US4685591 consiste à utiliser une bande soudée sur les extrémités du film.

Le brevet US4685591 décrit la réalisation d'un tube flexible pour la conservation de produits contenant des cyanoacrylates. Ces tubes sont fabriqués à partir d'un film multicouche et d'une bande ; ladite bande étant soudée à l'intérieur du tube et couvrant les deux extrémités soudées dudit film. Afin d'obtenir des propriétés barrière suffisantes au niveau de la zone soudée, le brevet US4685591 propose l'utilisation d'un film multicouche avec des couches soudantes en polyéthylène et d'une bande en polyéthylène. Le brevet US4685591 n'aborde pas la problématique du renfort de la zone soudée, le rôle de la bande ajoutée à l'intérieur de l'emballage étant d'améliorer les performances barrière. En outre, l'utilisation de l'information contenue dans le brevet US4685591 ne permet pas de renforcer efficacement la résistance de la zone soudée si l'épaisseur de la bande est faible devant l'épaisseur du film. II en résulte que l'enseignement du brevet précité peut être appliquée seulement de façon très restrictive pour renforcer la zone soudée.

Le brevet US4733800 décrit la réalisation d'un tube flexible fabriqué à partir d'un film plastique multicouche et ayant des propriétés de non retour élastique ; propriété caractéristique des tubes flexibles en aluminium. Le brevet US4733800 propose l'utilisation d'une bande soudée à l'intérieur ou à l'extérieur du tube et reliant les extrémités soudées, ladite bande contenant une feuille métallique apportant les propriétés de non retour. Le brevet susmentionné précise que l'épaisseur de la feuille métallique dans la bande est supérieure à l'épaisseur de la feuille métallique dans le film multicouche. L'enseignement contenu dans le brevet US4733800 permet de renforcer la zone soudée à l'aide d'une bande soudée reliant les extrémités du film. Cependant cette information est très restrictive, elle n'indique pas par exemple comment renforcer efficacement la zone soudée avec une bande de faible épaisseur et transparente.

Un autre inconvénient des emballages soudés est lié à l'esthétique de l'emballage au niveau de la zone soudée. Pour les emballages comprenant des soudures chair - cuir, la zone soudée est généralement exempte de décoration ce qui nuit à l'esthétisme de l'emballage. Pour les emballages comprenant une zone soudée chair - chair, les zones soudées forment des coutures latérales peu esthétique. Le soudage bout à bout des extrémités du film est décrit dans les brevets US5569144 et WO2005095105 cependant compte tenu de la médiocrité de la résistance de la zone soudée, ou de la complexité des solutions à mettre en oeuvre, aucune des solutions proposées dans ces brevets n'est utilisée aujourd'hui.

Le brevet US5569144 décrit un dispositif de soudage bout à bout des extrémités du film. Le tube obtenu présente des propriétés esthétiques améliorées, avec une zone de soudure quasiment invisible. Cependant la faible résistance du tube au niveau de la zone soudée rend l'utilisation de ces tubes sur le marché très risquée.

La demande de brevet WO2005095105 décrit une méthode pour améliorer le soudage bout à bout d'un film multicouche comportant une couche non soudante. Cette méthode consiste à utiliser un laminé comportant des films soudants au niveau des faces inférieure et supérieure ; la couche non soudante emprisonnée entre les films soudants se trouvant en retrait au niveau des extrémités du film ; de sorte que lors du soudage bout à bout les couches soudantes enveloppent la couche non soudante au niveau de son extrémité et permettent un soudage du film sur toute son épaisseur. Cette méthode permet l'amélioration du soudage bout à bout de films multicouches, cependant elle ne résout pas le problème fondamental puisque le soudage bout à bout d'un film soudant monocouche n'est pas satisfaisant. Les tubes multicouches réalisés selon la méthode proposée dans la demande WO2005095105 présentent donc une résistance insuffisante au niveau de la soudure.

L'invention permet de pallier les inconvénients précités grâce à une nouvelle méthode d'assemblage.

### Exposé général de l'invention

Ainsi, l'invention consiste notamment en une nouvelle méthode d'assemblage des extrémités d'un film comportant au moins une opération de soudage et une opération de collage. L'invention permet d'obtenir des emballages soudés-collés présentant une grande résistance au niveau de l'assemblage.

La méthode selon l'invention est particulièrement avantageuse pour réaliser un assemblage bout à bout des extrémités dudit film.

L'invention permet d'assembler bout à bout les extrémités d'un film dont les extrémités ne se soudent pas.

Pour une plus grande clarté dans l'exposé, il est utile de préciser la définition envisagée des opérations de soudage et collage dans le cadre de l'invention.

L'opération de soudage revient à assembler en faisant fondre deux matériaux de même nature ou miscibles à l'état fondu, ladite miscibilité se manifestant par la diffusion et l'interpénétration des chaînes moléculaires ; puis en faisant refroidir lesdits matériaux afin de figer l'état d'interpénétration moléculaire.

Par opposition au soudage, le collage est défini comme une opération d'assemblage de deux matériaux n'étant pas de même nature ou immiscible à l'état fondu. Le collage peut faire intervenir des mécanismes chimiques (réaction des bouts de chaîne, réticulation), des mécanismes physiques (forces de Van des Waals, évaporation). Le collage est une opération d'assemblage pouvant être réalisée à température ambiante ou en chauffant les matériaux.

Le concept général de l'invention est de réaliser un assemblage soudé - collé des extrémités d'un film, selon la définition précédente du collage et du soudage.

L'invention sera mieux comprise à l'aide de la description de modes d'exécution de celles-ci et des figures suivantes dans lesquelles:
Les figures 1 à 3 décrivent les principales méthodes connues dans l'art antérieur pour relier les extrémités d'un film.
La figure 1 illustre le soudage dit chair-chair qui consiste à assembler les faces inférieures des films 2 et 3, les dites faces inférieures étant situées à l'intérieur de l'emballage.
La figure 2 illustre le mode de soudage dit chair-cuir ou avec recouvrement qui consiste à souder la face supérieure du film 2 sur la face inférieure du film 3 ; lesdites faces inférieure et supérieure étant situées respectivement à l'intérieur et à l'extérieur de l'emballage.
La figure 3 illustre le mode de soudage dit bout à bout des extrémités des films 2 et 3.
Les figures 4 à 10 illustrent des assemblages soudés-collés selon le concept général de l'invention.

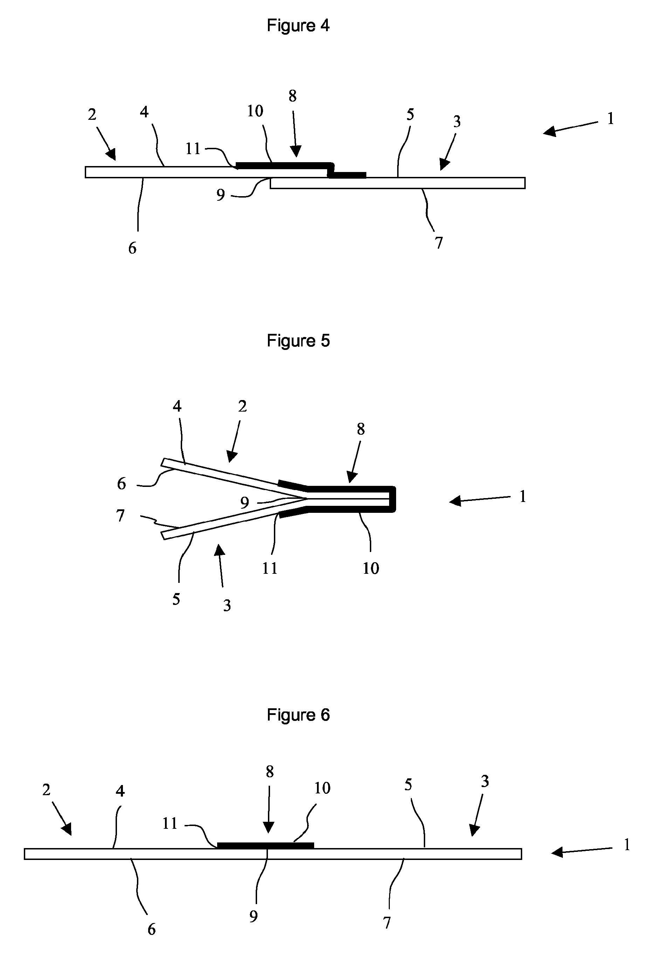

La figure 4 montre l'assemblage 1 soudé-collé avec recouvrement des films 2 et 3 ; lesdits films 2 et 3 étant soudés et une bande 10 de faible épaisseur étant collée sur les surfaces supérieures 4 et 5 desdits film et renforçant l'assemblage au niveau de la zone soudée.
La figure 5 montre l'assemblage 1 soudé-collé des films 2 et 3 assemblés sur leurs faces inférieures ; lesdits films 2 et 3 étant soudés et une bande 10 de faible épaisseur étant collée sur les faces supérieures 4 et 5 desdits films et renforçant l'assemblage au niveau de la zone soudée.
La figure 6 montre l'assemblage 1 soudé-collé des films 2 et 3 assemblés bout à bout ; lesdits films 2 et 3 étant au moins partiellement soudés et une bande 10 de faible épaisseur étant collée sur les faces supérieures 4 et 5 desdits films et renforçant l'assemblage au niveau de la zone soudée.

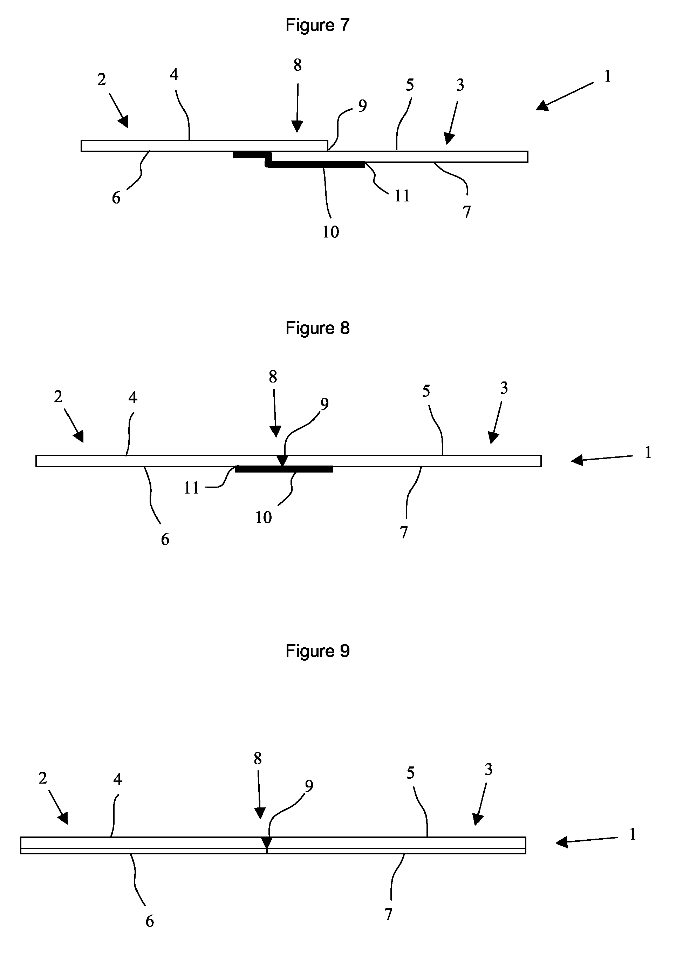

La figure 7 montre l'assemblage 1 soudé-collé avec recouvrement des films 2 et 3 ; lesdits films 2 et 3 étant collés et une bande 10 de faible épaisseur étant soudée sur les surfaces inférieures 6 et 7 desdits films et garantissant les propriétés d'hygiène à l'intérieur de l'emballage.
La figure 8 montre l'assemblage 1 soudé-collé des films 2 et 3 assemblés bout à bout ; lesdits films 2 et 3 étant au moins partiellement collés et une bande 10 de faible épaisseur étant soudée sur les faces inférieures 6 et 7 desdits films et garantissant les propriétés d'hygiène à l'intérieur de l'emballage.
La figure 9 montre l'assemblage 1 soudé-collé des films 2 et 3 assemblés bout à bout ; lesdites extrémités des films 2 et 3 étant partiellement collées et partiellement soudées ; au moins les couches inférieures 6 et 7 étant soudées bout à bout et garantissant les propriétés d'hygiène à l'intérieur de l'emballage.

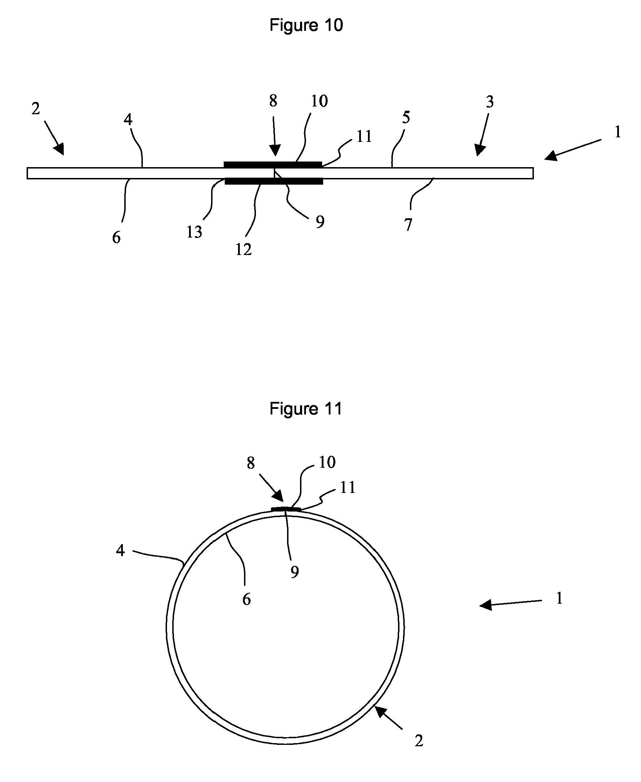

La figure 10 montre l'assemblage 1 soudé-collé bout à bout des films 2 et 3 ; une première bande 12 de faible épaisseur étant soudée sur les surfaces inférieures 6 et 7 desdits films et garantissant les propriétés d'hygiène à l'intérieur de l'emballage et une seconde bande 10 de faible épaisseur étant collée sur les surfaces supérieures 4 et 5 desdits films et renforçant l'assemblage au niveau de la zone soudée.
La figure 11 illustre un exemple de réalisation d'un corps tubulaire soudé-collé.

### Exposé détaillé de l'invention

Le principe général de l'invention est d'assembler les extrémités d'un film par soudage et collage. Comme il le sera montré dans l'exposé de l'invention, cette méthode permet de réaliser des emballages plus résistant, plus esthétique, et permet d'utiliser une plus grande variété de films monocouches ou multicouches.

La méthode de réalisation d'emballages par soudage-collage peut être utilisée pour des réaliser des assemblages des extrémités du film avec ou sans recouvrement.

Le concept général de la méthode est d'assembler les extrémités du film en soudant une partie des extrémités et en collant une autre partie des extrémités. Un mode préférentiel de l'invention comprend l'ajout d'une bande qui renforce l'assemblage.

La figure 4 illustre un premier exemple d'assemblage 1 soudé-collé. Les extrémités des films 2 et 3 sont assemblées en formant un recouvrement. La face inférieure 6 du film 2 est soudée sur la face supérieure 5 du film 3. Au niveau du recouvrement, l'interface 9 est soudée. Une bande 10 est collée sur les faces extérieures 4 et 5 des films 2 et 3 au niveau de la zone d'assemblage 8. La bande 10 renforce la zone d'assemblage 8 sur une largeur plus grande que le recouvrement, afin de prévenir les risques de rupture des films 2 et 3 à proximité dudit recouvrement. Nos expériences ont montré qu'il était favorable que la bande 10 dépasse le recouvrement d'au moins 1 mm. La figure 4 illustre le collage de la bande 10 sur les faces supérieures 4 et 5 des films 2 et 3 afin que ladite bande se situe à l'extérieur de l'emballage. Cependant il peut être envisagé de coller la bande sur l'autre face de l'assemblage de sorte que ladite bande se situe à l'intérieur de l'emballage.

L'épaisseur de la bande 10 est faible relativement à l'épaisseur des films 2 et 3. En général l'épaisseur de la bande est de 5 à 10 fois plus faible que l'épaisseur du film. La bande 10 peut être utilisée également pour améliorer les propriétés barrière de l'assemblage 1.

La figure 5 illustre un deuxième exemple d'assemblage 1 soudé- collé. Les faces inférieures 6 et 7 des films 2 et 3 sont soudées entre elles, et une bande 10 est collée sur les faces supérieures 4 et 5 desdits films. La bande 10 dépasse la partie soudée afin de renforcer les films 2 et 3 à proximité de la zone soudée.

La figure 6 illustre un mode préférentiel de l'invention dans lequel on réalise un assemblage bout à bout par soudage et collage. Les extrémités des films 2 et 3 sont reliées par soudage au niveau de l'interface 9. Une bande 10 est collée sur les faces 4 et 5 des films 2 et 3 et relie les extrémités soudées créant un lien supplémentaire qui renforce l'assemblage. En général, la bande 10 est collée sur la face supérieure des films 2 et 3, et se trouve à l'extérieur de l'emballage. La soudure bout à bout des extrémités du film garantit les propriétés hygiéniques de l'emballage et évite la migration de la colle à l'intérieur de l'emballage. Cependant, il peut être utile dans certains cas de coller la bande sur la face inférieure des films 2 et 3, et se situe à l'intérieur de l'emballage. Cette solution peut être adoptée lorsque le produit emballé peut être mis en contact direct avec la colle.

Le soudage bout à bout de films illustré à la figure 6 est particulièrement avantageux parce qu'il permet de confectionner des emballages ayant des propriétés esthétiques améliorées ; l'amélioration de l'esthétique de l'emballage étant liée au fait que la zone de soudure est peu visible et que la paroi de l'emballage ne présente pas de sur-épaisseur au niveau de la zone soudée.

Le soudage bout à bout de films avec les techniques actuelles n'est pas utilisé pour confectionner des emballages car la zone soudée est moins résistante que le film, ce qui crée des emballages fragiles avec un risque de rupture au niveau de la zone soudée. On observe en particulier qu'un film soudé bout à bout présente un mode de rupture fragile au niveau de la soudure alors que dans le film lui-même cette rupture est ductile. L'invention permet de remédier à cet inconvénient, la zone assemblée pouvant être finalement plus résistante que le film.

Le mode préférentiel de l'invention illustré à la figure 6 permet l'obtention d'emballages dont la qualité visuelle est améliorée. II est avantageux en effet d'utiliser une bande collée de fine épaisseur et transparente de sorte que la zone d'assemblage soit invisible. L'invention permet une décoration ininterrompue au niveau de la zone d'assemblage.

Le mode préférentiel illustré à la figure 6 permet l'assemblage d'un grand nombre de films monocouches ou multicouches. Pour la confection d'emballages, il est particulièrement intéressant d'utiliser des films qui associent des couches soudantes et des couches fonctionnelles. On définit par couche soudante, une couche dont la principale caractéristique est de permettre la confection par soudage de l'emballage. Les couches soudantes sont généralement à base de polyoléfines (PP, PE). On définit par couche fonctionnelle, une couche dont la principale caractéristique est l'apport de propriétés autres que la faculté de se souder. Les couches fonctionnelles généralement de fine épaisseur sont utilisées pour améliorer l'apparence de l'emballage (couches imprimées, transparence), pour améliorer la résistance de l'emballage (couches bi-orientées, couches techniques), pour apporter des propriétés barrière (oxygène, aromes) ou pour apporter des fonctionnalité (déchirure facile pour ouvrir l'emballage). Les couches fonctionnelles sont à base d'une grande diversité de résine dont le choix dépend des propriétés recherchées (par exemple : PET, PA, PS, EVOH, PVDC). Les principales couches fonctionnelles utilisées aujourd'hui sont les films mono ou bi-orientés (PP, PET, PA, PS) ; les films avec des propriétés barrière (PET avec dépôt d'un coating SiOx, PVDC, EVOH, PA).

Le mode préférentiel de l'invention illustré à la figure 6 permet l'assemblage bout à bout d'un film composé de couche fonctionnelle et de couche soudante, ladite couche fonctionnelle étant au mieux partiellement soudée ; la bande collée reliant les extrémités du film permettant de compenser la perte de résistance au niveau de la zone soudée. Lorsque la couche fonctionnelle est sur la surface supérieure du film, la bande est directement solidaire de ladite couche et assure la continuité de ladite couche dans la zone d'assemblage. La bande est collée, et sa résistance est telle qu'elle compense la fragilité de la zone soudée bout à bout.

Le mode préférentiel illustré à la figure 6 est avantageux pour relier bout à bout des films comprenant des couches dont la différence de température de fusion est supérieure à 20°C. L'assemblage de ces films selon le mode préférentiel consiste à chauffer ledit film à une température proche de la température de fusion de la couche soudante, et à relier les extrémités dudit film par l'intermédiaire d'une bande collée.

Le mode préférentiel de l'invention permet d'obtenir des emballages soudés - collés avec une variation d'épaisseur négligeable au niveau de la zone d'assemblage et ayant une résistance de la zone d'assemblage équivalente à la résistance du film lui-même. Les emballages obtenus peuvent être imprimés sur toute leur surface sans interruption de l'impression dans la zone d'assemblage.

La figure 7 illustre un autre exemple d'assemblage 1 par soudage - collage. Les extrémités des films 2 et 3 sont collées au niveau du recouvrement. La face inférieure 6 du film 2 est collée sur la face supérieure 5 du film 3. Une bande 10 est soudée sur les surfaces inférieures 6 et 7 des films 2 et 3, et renforce l'assemblage. La bande soudée 11 garantit les propriétés d'hygiène à l'intérieur de l'emballage et évite le contact de la colle ou des extrémités du film avec le produit emballé. La configuration décrite en référence à la figure 7 est particulièrement avantageuse pour réaliser un assemblage de films multicouches comprenant un film soudant sur seulement sur sa face inférieure. A titre d'exemple, les films bicouche cartons PE peuvent être assemblés selon la méthode décrite en référence à la figure 7.

La figure 8 montre un assemblage 1 soudé - collé bout à bout des extrémités de films. Les extrémités des films 2 et 3 sont collées bout à bout au niveau de l'interface 9. Comme l'illustre la figure 8, les extrémités collées des films 2 et 3 sont coupées en biais afin à former un réceptacle pour la colle. Une bande 10 est soudée sur les faces inférieures 6 et 7 des films 2 et 3, et se situe à l'intérieur de l'emballage. La bande soudée 11 renforce la zone d'assemblage 8 et garantit les propriétés d'hygiène à l'intérieur de l'emballage en évitant le contact de la colle ou des extrémités du film avec le produit emballé. La configuration décrite en référence à la figure 8 est particulièrement avantageuse pour assembler bout à bout des films multicouches comprenant un film soudant sur seulement sur sa face inférieure. A titre d'exemple, les films bicouches cartons PE peuvent être assemblés selon la méthode décrite en référence à la figure 8.

La figure 9 illustre un autre assemblage bout à bout soudé collé. Cet assemblage consiste à souder bout à bout seulement une partie de l'épaisseur du film, et à coller ladite partie du film non soudée. Les couches soudantes des films 2 et 3 formant les surfaces inférieures 6 et 7 desdits films, sont soudées bout à bout au niveau de l'interface 9. les couches non soudantes des films 2 et 3 formant les surfaces supérieures desdits films, sont collées au niveau de l'interface 9. Comme le montre la figure 9, les extrémités soudées collées des films 2 et 3 sont préférentiellement coupées en biais de façon à former un réceptacle et faciliter le dépôt de la colle au niveau des extrémités. La méthode d'assemblage illustrée à la figure 9 est avantageuse pour assembler bout à bout des films comportant une couche soudante sur la face inférieure ou la face supérieure. La méthode d'assemblage illustrée à la figure 9 est particulièrement avantageuse pour assembler des films bicouches carton - polyéthylène, la couche de polyéthylène se situant à l'intérieur de l'emballage et étant soudée.

La figure 10 illustre un assemblage bout à bout soudé - collé, avec ajout de deux bandes. Cet assemblage est particulièrement avantageux pour assembler des films non soudants bout à bout. Les extrémités des films 2 et 3 sont de préférence uniquement juxtaposées bout à bout, mais lesdites extrémités peuvent également être collées ou soudées au niveau de l'interface 9. Une première bande 10 est collée sur les faces supérieures 4 et 5 des films 2 et 3, et relie les extrémités desdits films. Une deuxième bande 12 est soudée sur les faces inférieures 6 et 7 des films 2 et 3 et garantit les propriétés d'hygiène au niveau de l'assemblage 8. La bande 12 se situe à l'intérieur de l'emballage. L'assemblage illustré à la figure 10 est avantageux pour associer des films non soudant bout à bout comportant une couche soudante sur la face inférieure. A titre d'exemple ces films peuvent être des films bicouches PET/PE ou carton/PE.

Le procédé selon l'invention permet de confectionner des corps tubulaires par assemblage des extrémités d'un film. Un exemple d'assemblage pour former un corps tubulaire est illustré à la figure 11. Cet exemple correspond à l'assemblage selon le mode préférentiel de l'invention de la figure 6. Un film 2 est enroulé autour d'un axe afin de former un corps tubulaire, et ses extrémités sont soudées bout à bout au niveau de l'interface 9. Une bande 10 est collée sur la face supérieure 4 du film 2 formant la surface externe de l'emballage, et renforce la zone d'assemblage 8. Ces corps tubulaires sont particulièrement avantageux car ils peuvent être réalisés avec des films comportant seulement deux couches, une première couche étant soudante et une deuxième couche étant fonctionnelle. Ces films ne peuvent être utilisés pour réaliser des corps tubulaires selon l'état de l'art car ils ne permettent pas un soudage par assemblage de la face intérieure sur la face extérieure.

L'invention ne se limite pas aux exemples illustrés par les figures 1 à 11. Des corps tubulaires peuvent être réalisés selon les méthodes présentées dans les figures 1 à 10. D'autres méthodes résultant de la combinaison des méthodes illustrées par les figures 1 à 10 font parties également de l'invention.

L'invention permet de réaliser des emballages économiques, de faible épaisseur et de grande résistance. L'invention peut être utilisée pour l'assemblage de films plastiques monocouches et multicouches mais également pour des films comprenant des couches aluminium, des couches de papier ou de carton

L'épaisseur de la bande est faible relativement à l'épaisseur des films. En général l'épaisseur de la bande est de 5 à 10 fois plus faible que l'épaisseur du film. L'épaisseur de ladite bande est préférentiellement comprise entre 10 et 60 microns. La bande peut être imprimée ou transparente ; elle peut être collée ou soudée sur la surface du laminé ; elle peut contenir une couche barrière afin d'améliorer les propriétés barrière de l'assemblage. La bande peut être appliquée avant soudage ou après soudage bout à bout du laminé. La bande peut être une bande adhésive dont l'application se fait à température ambiante, la bande peut être collée par ajout de colle à l'interface entre le film et ladite bande, la bande peut être collée en chauffant ladite bande. La force d'adhésion de la bande sur la surface du film est un facteur déterminant de la résistance de l'assemblage. Une force d'adhésion trop faible conduit à des risques de rupture de l'assemblage lorsque l'emballage est sollicité en pression, en traction, au pliage, en choc, ou en fatigue. Aussi, il est souhaité d'obtenir une forte adhésion entre la bande et le film de sorte que ladite bande ne puisse être séparé dudit film.

La bande peut être soudée ou collée sur la surface supérieure ou inférieure du film. En surface supérieure de l'assemblage formant la surface externe de l'emballage, il est souvent favorable de coller la bande sur le film. De nombreuses colles et méthodes de collages peuvent être envisagées. A titre d'exemple une première méthode consiste à rapporter une bande sur laquelle la colle a été préalablement appliquée. Une première variante de cette méthode est la bande adhésive applicable à température ambiante, une seconde variante est une bande adhésive que l'on colle en chauffant. L'utilisation d'une bande adhésive conduit à un procédé facile à maîtriser et facilement industrialisable. Une autre méthode consiste à appliquer la colle sur la bande ou sur le film au moment de l'assemblage. L'utilisation de colles réactives à deux composants permet d'obtenir de forts niveaux d'adhésion. Généralement l'opération de collage ne nécessite pas de traitement particulier de la surface de la zone assemblée, cependant il est possible de faire des traitements de surface avant collage (traitement corona par exemple).

### Exemple 1

Tube flexible réalisé selon la figure 11.

| Film multicouche : | |
|---|---|
| Couches | PE /colle/ EVOH /colle/ PE |
| Epaisseur (microns) | 180 / 5 / 20 / 5 / 100 |

| Bande adhésive | |
|---|---|
| Couches | PE / Hot melt (Bostik TLH 4280 E) |
| Epaisseur (microns) | 60 / 5 |

### Exemple 2

Tube flexible réalisé selon la figure 11.

| Film multicouche : | |
|---|---|
| Couches | PET /colle/ PE |
| Epaisseur (microns) | 30 / 5 / 155 |

| Bande thermocollée | |
|---|---|
| Couches | PET / adhésif (Bostik Vitel 1912) |
| Epaisseur (microns) | 40 / 5 |

### Exemple 3

Tube flexible réalisé selon la figure 11.

| Film multicouche : | |
|---|---|
| Couches | PE /colle/ Alu /colle/ PE |
| Epaisseur (microns) | 150 / 4 / 12 / 4 /80 |

| Bande adhésive | |
|---|---|
| Couches | BOPP / Hot melt (Bostik TLH 2013) |
| Epaisseur (microns) | 40 / 5 |

### Exemple 4

Tube flexible réalisé selon la figure 11.

| Film multicouche : | |
|---|---|
| Couches | BOPP / colle / PE |
| Epaisseur (microns) | 30 / 5 / 130 |

| Bande collée | |
|---|---|
| Couches | BOPP |
| Epaisseur (microns) | 50 |

| | |
|---|---|
| Colle : Hot melt (Bostik FP 459) | |

## Revendications

1. Procédé d'assemblage des extrémités d'un film thermoplastique pour la confection d'un emballage ; **caractérisé par le fait qu'**il comprend au moins une opération de soudage et une opération de collage pour réaliser ledit assemblage.

2. Procédé selon la revendication 1 dans lequel les extrémités du film sont assemblées bout à bout.

3. Procédé selon la revendication 1 dans lequel les extrémités du film sont assemblées par chevauchement.

4. Procédé selon l'une quelconque des revendications précédentes dans lequel les extrémités du film sont soudées et au moins une bande qui relie les extrémités du film est collée.

5. Procédé selon l'une quelconque des revendications précédentes dans lequel une première bande est collée et une deuxième bande est soudée.

6. Procédé selon la revendication 4 ou 5 dans lequel on dispose la bande collée sur la face supérieure de l'emballage.

7. Procédé selon l'une quelconque des revendications précédentes 4 à 6 dans lequel la bande collée est une bande adhésive.

8. Procédé selon l'une des revendications de 1 à 3 dans lequel les extrémités du film sont collées et au moins une bande qui relie les extrémités du film est soudée.

9. Procédé selon l'une des revendication1 à 3 ou 8, dans lequel une première bande est soudée et une deuxième bande est collée.

10. Procédé selon la revendication 8 ou 9, dans lequel on dispose la bande soudée sur la face supérieure de l'emballage.

11. Procédé selon l'une quelconques des revendications précédentes dans lequel l'assemblage des extrémités forme un corps tubulaire.

12. Emballage réalisé par assemblage des extrémités d'un film, comportant au moins une bande reliant les extrémités dudit film; **caractérisé par le fait que** les extrémités du film sont soudées et que la bande est collée.

13. Emballage selon la revendication 12 dans lequel ladite bande est collée sur la surface supérieure de l'emballage.

14. Emballage selon la revendication 12 ou 13, dans lequel la bande est une bande adhésive.

15. Emballage réalisé par assemblage des extrémités d'un film, comportant au moins une bande reliant les extrémités dudit film, **caractérisé par le fait que** les extrémités du film sont collées et que la bande est soudée.

16. Emballage selon la revendication 15, dans lequel ladite bande est soudée sur la surface supérieure de l'emballage.

17. Emballage selon l'une des revendications 12 à 14 ou 15 ou 16, comportant deux bandes dont l'une est collée et l'autre est soudée.

18. Emballage selon l'une des revendication 12 à 17, dans lequel l'assemblage des extrémités du film lui donne une forme tubulaire.
